Europäisches Patentamt

European Patent Office

Office européen des brevets

(19)

(11) **EP 1 261 182 B1**

(12) **FASCICULE DE BREVET EUROPEEN**

(45) Date de publication et mention
de la délivrance du brevet:
**14.07.2004 Bulletin 2004/29**

(51) Int Cl.⁷: **H04L 27/156**

(21) Numéro de dépôt: **02364025.3**

(22) Date de dépôt: **17.05.2002**

(54) **Récepteur de signaux modulés en fréquence avec démodulateur numérique**

Empfänger für frequenzmodulierte Signale mit digitalen Demodulator

Receiver for frequency modulated signals with digital demodulator

(84) Etats contractants désignés:
**DE FR GB IT**

(30) Priorité: **23.05.2001 FR 0106766**

(43) Date de publication de la demande:
**27.11.2002 Bulletin 2002/48**

(73) Titulaire: **STMicroelectronics**
**92120 Montrouge (FR)**

(72) Inventeurs:
• **Joisson, Marc**
**56100 Lorient (FR)**

• **Garcia, Luc**
**56100 Lorient (FR)**
• **Leveque, S-bastien**
**56100 Lorient (FR)**

(74) Mandataire: **Ballot, Paul**
**Cabinet Ballot**
**4 rue Général Hoche**
**56100 Lorient (FR)**

(56) Documents cités:
**EP-A- 0 564 426**    **US-A- 3 548 328**
**US-A- 5 550 505**    **US-A- 5 818 881**

**Description**

La présente invention concerne un récepteur de signaux modulés en fréquence avec démodulateur numérique. L'invention trouve son application dans tous systèmes de liaison radio.

La technique de modulation de fréquence ou de modulation par déplacement de fréquence (Frequency Shift Keying en langue anglaise) est communément employée pour transmettre un signal numérique d'un émetteur vers un récepteur en associant une fréquence de modulation particulière à chaque valeur numérique du signal numérique. Dans le cas d'un signal binaire, une fréquence f1 est attribuée à la valeur 0 et une fréquence f2 à la valeur 1. L'émetteur comporte alors un modulateur qui émet pour chaque valeur numérique la fréquence de modulation qui lui est associée et le récepteur comporte un démodulateur numérique chargé de restituer les valeurs binaires du signal numérique en discriminant les fréquences de modulation du signal modulé reçu.

La démodulation de tels signaux consiste par exemple à mesurer la période du signal reçu en l'échantillonnant à une fréquence très élevée pour détecter les passages à zéro du signal et à comparer la valeur de période mesurée à des valeurs de périodes correspondant aux différentes fréquences de modulation. La précision de la mesure nécessite que la fréquence du signal d'échantillonnage soit très supérieure aux fréquences de modulation du signal reçu, à savoir aux fréquences f1 et f2 dans le cas d'un signal binaire. La fréquence d'échantillonnage est alors d'autant plus élevée que les fréquences f1 et f2 sont élevées. La fréquence d'échantillonnage doit également être d'autant plus élevée que les fréquences f1 et f2 sont proches pour que le démodulateur puisse correctement les discriminer. Aussi, pour que la fréquence d'échantillonnage nécessaire ne soit pas trop élevée, la fréquence du signal reçu est généralement abaissée à une fréquence intermédiaire de plus faible valeur à l'aide d'un bloc de transposition en fréquence placé en amont du démodulateur numérique dans le récepteur.

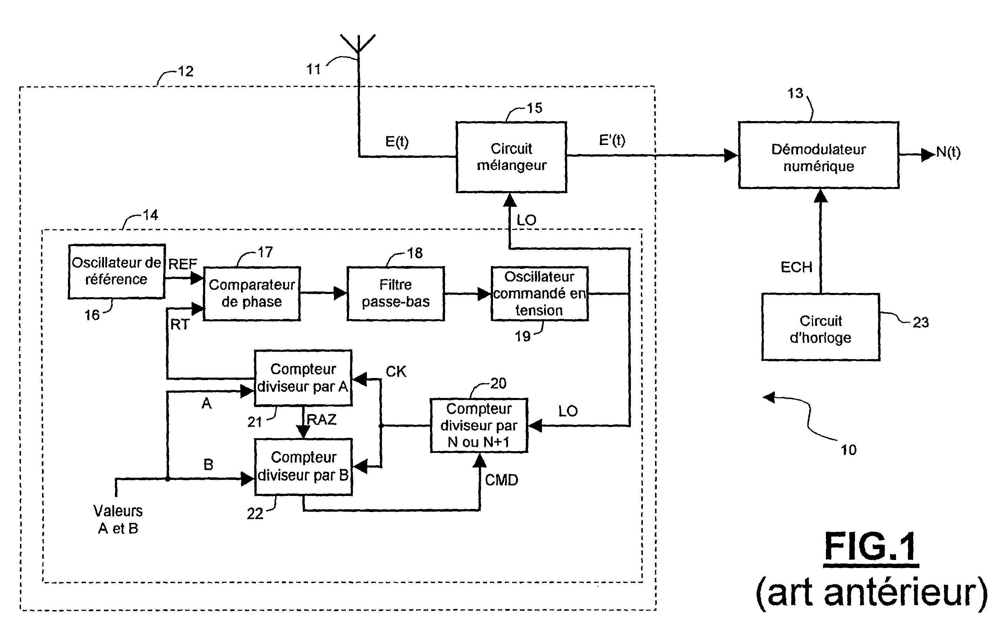

Un tel récepteur, référencé 10, est montré à la figure 1. D'une manière générale, il comporte une antenne 11 pour capter un signal analogique E(t) modulé par déplacement de fréquence, un premier bloc de transposition en fréquence 12 pour abaisser la fréquence du signal E(t) et délivrer un signal E'(t), un démodulateur numérique 13 pour démoduler le signal E'(t) et délivrer un signal numérique N(t) représentatif du signal E(t) modulé en fréquence, et un circuit d'horloge 23 pour générer un signal d'échantillonnage ECH de fréquence élevée (très supérieure à celle du signal E'(t)) destiné au démodulateur numérique.

Pour abaisser la fréquence du signal E(t), le bloc 12 dispose d'un oscillateur local 14 qui génère un signal d'oscillateur local LO de fréquence $f_{LO}$ et un circuit mélangeur 15 qui multiplie le signal E(t) avec le signal LO. Dans ce bloc, la fréquence du signal E(t) est abaissée de la valeur $f_{LO}$.

L'oscillateur local 14 comprend de manière classique un oscillateur de référence 16 délivrant un signal de référence REF et une boucle de verrouillage de phase. La boucle de verrouillage de phase comprend un comparateur de phase 17 à deux entrées recevant sur une première entrée le signal de référence REF et sur une deuxième entrée un signal de boucle RT. Le signal à la sortie du comparateur de phase 17 est filtré par un filtre passe-bas 18 puis traité par un oscillateur commandé en tension 19. Le signal délivré par l'oscillateur commandé en tension 19 est appliqué sur la deuxième entrée du circuit mélangeur 15. Il est également divisé en fréquence par un premier compteur diviseur de fréquence 20. Ce compteur diviseur 20 divise la fréquence du signal LO par N ou N+1 en fonction d'un signal de commande CMD (N est un nombre entier). Il délivre un signal CK dont la fréquence est elle-même divisée par un second compteur diviseur 21. Le signal issu du compteur diviseur 21 est le signal de boucle RT qui est appliqué sur la deuxième entrée du comparateur de phase 17. Un troisième compteur diviseur 22 est par ailleurs utilisé pour générer le signal de commande CMD. Le compteur diviseur 22 reçoit le signal CK et un signal de remise à zéro RAZ provenant du compteur diviseur 21. Les compteurs diviseurs 21 et 22 sont des compteurs préréglables dont on peut modifier la valeur limite de comptage. Dans l'exemple de la figure 1, le compteur diviseur 21 est prévu pour compter jusqu'à A et le compteur diviseur 22 jusqu'à B, avec A>B. Le fonctionnement de cette boucle de verrouillage de phase est bien connu de l'homme du métier.

Les compteurs 21 et 22 comptent les impulsions du signal CK. Tant que le compteur 22 n'a pas atteint la valeur B, le compteur diviseur 20 divise la fréquence du signal LO par N+1. Il divise ensuite la fréquence du signal LO par N jusqu'à ce que le compteur 21 atteigne la valeur A. Le compteur diviseur 21 remet alors à zéro par le signal RAZ le compteur diviseur 22.

En cas de démodulation par déplacement de fréquence (Frequency Shift Keying Demodulation en langue anglaise) avec saut de fréquence (Fréquency Hoping en langue anglaise), les valeurs A et B varient périodiquement de manière aléatoire afin de modifier périodiquement la fréquence du signal LO.

Le document EP 0 564 426 décrit également un dispositif de démodulation de signaux modulés en fréquence comportant un bloc de transposition en fréquence pour abaisser la fréquence du signal présent à l'entrée du dispositif. Des moyens de comptage sont prévus pour compter les périodes d'un signal de référence de fréquence fr du bloc de transposition en fréquence pendant une période du signal abaissé en fréquence. Le nombre de périodes comptées est ensuite fourni à un décodeur pour déterminer la période du signal abaissé en fréquence.

Cependant, un tel dispositif ne permet pas de générer une mesure de la période du signal abaissé en fréquence lorsque le signal de référence généré par le bloc de transposition en fréquence présente une fréquence variable.

Un premier but de l'invention est d'optimiser la taille sur silicium d'un récepteur tel que décrit en référence à la figure 1, où le signal de référence utilisé dans le bloc de transposition présente une fréquence variable. C'est pourquoi, selon l'invention, on cherche à réaliser un récepteur ne comportant pas de circuit d'horloge pour générer le signal d'échantillonnage. En effet, ce circuit d'horloge occupe une surface sur silicium non négligeable. Par ailleurs, il consomme du courant et peut créer des bruits parasites pour les autres éléments du récepteur.

Un autre but de l'invention est de générer une mesure précise de la période du signal E'(t).

Un autre but de l'invention est de proposer un récepteur numérique qui soit de conception simple.

Selon l'invention, des moyens sont prévus dans l'oscillateur local du récepteur et dans le démodulateur numérique pour calculer la période du signal abaissé en fréquence E'(t).

Aussi, l'invention concerne un récepteur d'un signal modulé en fréquence représentatif d'un signal numérique, comportant un bloc de transposition en fréquence pour abaisser la fréquence dudit signal modulé en fréquence, un démodulateur numérique pour regénérer ledit signal numérique à partir du signal abaissé en fréquence, des moyens de comptage pour déterminer le nombre de périodes d'un signal de référence dudit bloc de transposition en fréquence pendant une période dudit signal abaissé en fréquence, le démodulateur numérique comportant des moyens de calcul pour calculer la période dudit signal abaissé en fréquence à partir dudit nombre de périodes du signal de référence.

L'invention est plus particulièrement caractérisé en ce que la durée de la période dudit signal de référence est variable et peut prendre deux valeurs possibles, T1 et T2, les moyens de comptage comportant un premier compteur pour compter un nombre P de périodes de durée T1 du signal de référence pendant une période du signal abaissé en fréquence et un second compteur pour compter un nombre Q de périodes de durée T2 du signal de référence pendant une période du signal abaissé en fréquence et en ce que les moyens de calcul du démodulateur numérique calculent la période du signal abaissé en fréquence en additionnant les P périodes de durée T1 et les Q périodes de durée T2.

Le signal de référence est par exemple le signal CK généré par l'oscillateur local 14 de la figure 1.

D'autres caractéristiques et avantages de l'invention apparaîtront à la lecture de la description détaillée qui suit et qui est faite en référence aux dessins annexés :

- la figure 1, déjà décrite, est un schéma détaillé d'un récepteur numérique de l'art antérieur; et

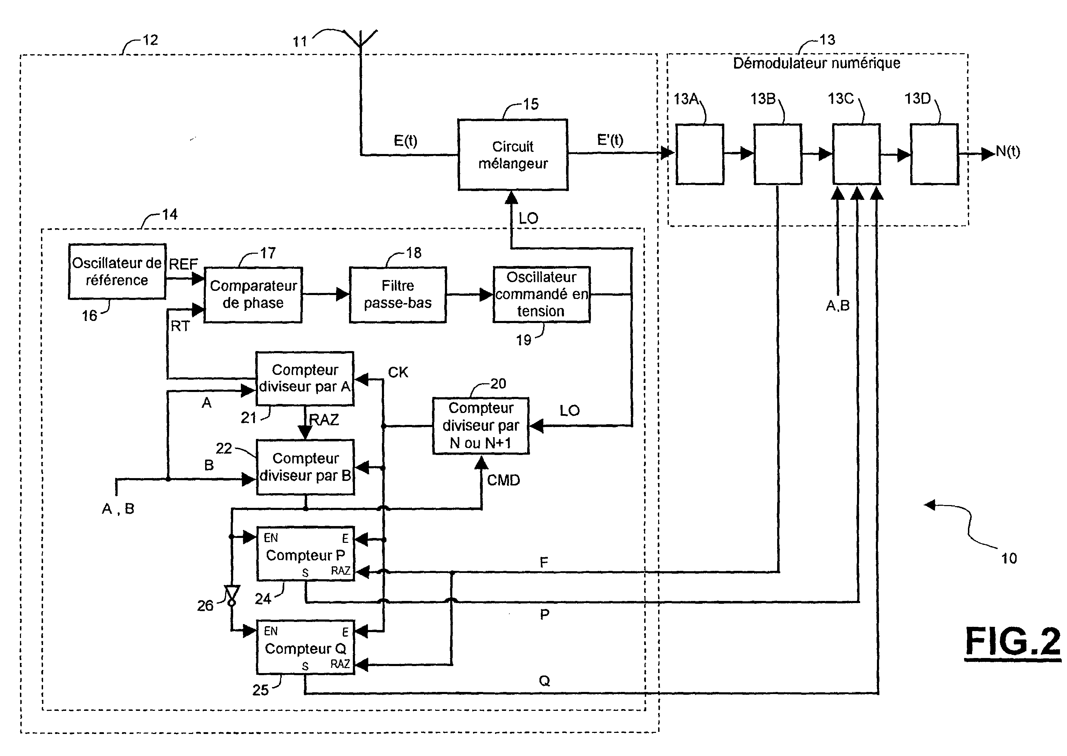

- la figure 2 est un schéma détaillé d'un récepteur numérique selon l'invention.

Dans la suite de la description, $T_{LO}$ et $f_{LO}$ désignent la période et la fréquence du signal LO. De même, $T_{CK}$ et $f_{CK}$ désignent la période et la fréquence du signal CK.

On prévoit, selon l'invention, de mesurer la période du signal E'(t) en comptabilisant le nombre de périodes du signal CK pendant une période du signal E'(t). Or, étant donné que la période instantanée du signal CK n'est pas constante ($T_{CK}$ est égale à $N \times T_{LO}$ ou $(N+1) \times T_{LO}$), on prévoit de comptabiliser d'une part les périodes $T_{CK}$ dont la durée est égale à $N \times T_{LO}$ et d'autre part les périodes $T_{CK}$ dont la durée est égale à $(N+1) \times T_{LO}$. On va pouvoir obtenir ainsi une mesure précise de la période du signal E'(t). Dans la suite de la description, T1 désigne la durée $N \times T_{LO}$ et T2 la durée $(N+1) \times T_{LO}$.

L'oscillateur local 14 comporte à cet effet, en plus des éléments de la figure 1, deux compteurs:

- un premier compteur, 24, pour compter un nombre P de périodes $T_{CK}$ de durée T1 pendant une période du signal E'(t),
- un deuxième compteur, 25, pour compter un nombre Q de périodes $T_{CK}$ de durée T2 pendant une période du signal E'(t).

La période, notée T, du signal E'(t) est alors obtenue en effectuant le calcul suivant :

$$T = P \times T1 + Q \times T2 = [P \times N + Q \times (N+1)] \times T_{LO}$$

Chacun des compteurs 24 et 25 comprend une entrée de validation EN, une entrée de comptage E, une entrée de remise à zéro RAZ et une sortie de comptage S. Le démodulateur numérique 13 comprend par ailleurs des moyens 13A pour convertir le signal E'(t) en un signal logique, des moyens 13B pour détecter les transitions du signal logique (à savoir les fronts montants ou les fronts descendants de celui-ci), des moyens 13C pour calculer la période T à partir des nombres P et Q et des moyens 13D pour comparer la période calculée avec des valeurs de période correspondant à des valeurs numériques particulières et reconstituer ainsi le signal numérique avant modulation N(t).

Les moyens 13B de détection fournissent aux compteurs 24 et 25 un signal F actif à chaque front montant (ou à chaque front descendant) du signal E'(t).

Dans cet exemple, on considère que le signal CMD présente un niveau haut lorsque le compteur diviseur 20 divise par N. Le signal CMD est appliqué sur l'entrée de validation EN du compteur 24. Ce signal est par ailleurs inversé par un circuit inverseur 26 avant d'être appliqué sur l'entrée de validation EN du compteur 25. Le signal F est appliqué sur l'entrée de remise à zéro RAZ des compteurs 24 et 25. Enfin, le signal CK est appliqué sur les entrées de comptage E de ces deux compteurs.

Ainsi, quand le compteur diviseur 20 divise la fréquence du signal par N, le compteur 24 comptabilise les périodes du signal CK. Le résultat P est délivré par la sortie S du compteur 24. De même, quand le compteur diviseur 20 divise la fréquence du signal par N+1, le compteur 25 comptabilise les périodes du signal CK. Le résultat Q est délivré par la sortie S du compteur 25. Les valeurs P et Q sont réinitialisées à chaque fois que le signal F est actif.

Avant chaque réinitilisation, les valeurs P et Q sont chargées dans le démodulateur numérique 13. Les valeurs A et B, représentatives de la période $T_{LO}$, sont également fournies aux moyens 13C. Les moyens 13C sont alors aptes à calculer la période T à partir des valeurs P et Q. En variante, on pourrait prévoir de fournir directement le signal LO à la place des valeurs A et B pour déterminer la valeur $T_{LO}$.

En pratique, le récepteur est réalisé sous la forme d'un circuit intégré.

**Revendications**

1. Récepteur (10) d'un signal modulé en fréquence représentatif d'un signal numérique, comportant un bloc de transposition en fréquence (12) pour abaisser la fréquence dudit signal modulé en fréquence, un démodulateur numérique (13) pour regénérer ledit signal numérique à partir du signal abaissé en fréquence (E'(t)),
des moyens de comptage (24,25) pour déterminer le nombre de périodes d'un signal de référence (CK) dudit bloc de transposition en fréquence pendant une période dudit signal abaissé en fréquence (E'(t)), le démodulateur numérique (13) comportant des moyens de calcul (13C) pour calculer la période dudit signal abaissé en fréquence (E'(t)) à partir dudit nombre de périodes du signal de référence (CK), **caractérisé en ce que** la durée de la période dudit signal de référence (CK) est variable et peut prendre deux valeurs possibles, T1 et T2, les moyens de comptage comportant un premier compteur (24) pour compter un nombre P de périodes de durée T1 du signal de référence (CK) pendant une période du signal abaissé en fréquence (E'(t)) et un second compteur (25) pour compter un nombre Q de périodes de durée T2 du signal de référence (CK) pendant une période du signal abaissé en fréquence (E'(t)) et **en ce que** les moyens de calcul (13C) du démodulateur numérique calculent la période du signal abaissé en fréquence (E'(t)) en additionnant les P périodes de durée T1 et les Q périodes de durée T2.

2. Récepteur selon la revendication 1, **caractérisé en ce que** le signal de référence (CK) est généré par un oscillateur local (14) dudit bloc de transposition en fréquence (12).

3. Récepteur selon la revendication 1 ou 2, **caractérisé en ce que** le démodulateur numérique comprend en outre des moyens (13A) pour convertir le signal abaissé en fréquence (E'(t)) en un signal logique et des moyens (13B) pour détecter les fronts montants dudit signal logique, lesdits premier et second compteurs (24,25) étant réinitialisés à chaque front montant dudit signal logique.

4. Récepteur selon la revendication 1 ou 2, **caractérisé en ce que** le démodulateur numérique comprend en outre des moyens (13A) pour convertir le signal abaissé en fréquence (E'(t)) en un signal logique et des moyens (13B) pour détecter les fronts descendants dudit signal logique, lesdits premier et second compteurs (24,25) étant réinitialisés à chaque front descendant dudit signal logique.

5. Récepteur selon l'une des revendications précédentes **caractérisé en ce qu'**il est réalisé en circuit intégré.

**Claims**

1. Receiver (10) for a frequency-modulated signal representing a digital signal, comprising a frequency transposition unit (12) for lowering the frequency of the said frequency-modulated signal, and a digital demodulator (13) for regenerating the said digital signal from the signal lowered in frequency (E'(t)), counting means (24, 25) for determining the number of periods of a reference signal (CK) of the said frequency transposition unit during a period of the said signal lowered in frequency (E'(t)), the digital demodulator (13) comprising calculation means (13C) for calculating the period of the said signal lowered in frequency (E'(t)) from the said number of periods of the reference signal (CK), **characterised in that** the duration of the period of the said reference signal (CK) is variable and can take two possible values, T1 and T2, the counting means comprising a first counter (24) for counting a number P of periods of duration T1 of the reference signal (CK) during a period of the signal lowered in frequency (E'(t)) and a second counter (25) for counting a number Q of periods of duration T2 of the reference signal (CK) during a period of the signal lowered in frequency (E'(t)) and **in that** the calculation means (13C) of the digital demodulator calculate the period of the signal lowered in frequency (E'(t)) by adding the P periods of duration T1 and the Q periods of duration T2.

**2.** Receiver according to Claim 1, **characterised in that** the reference signal (CK) is generated by a local oscillator (14) of the said frequency-transposition unit (12).

**3.** Receiver according to Claim 1 or 2, **characterised in that** the digital demodulator also comprises means (13A) for converting the signal lowered in frequency (E'(t)) into a logic signal and means (13B) for detecting the rising edges of the said logic signal, the said first and second counters (24, 25) being reinitialised at each rising edge of the said logic signal.

**4.** Receiver according to Claim 1 or 2, **characterised in that** the digital demodulator also comprises means (13A) for converting the signal lowered in frequency (E'(t)) into a logic signal and means (13B) for detecting the falling edges of the said logic signal, the said first and second counters (24, 25) being reinitialised as each falling edge of the said logic signal.

**5.** Receiver according to one of the preceding claims, **characterised in that** it is produced as an integrated circuit.

**Patentansprüche**

**1.** Empfänger (10) eines frequenzmodulierten Signals, das repräsentativ für ein numerisches Signal ist, mit einem Frequenzumsetzungsblock (12) zum Herabsetzen der Frequenz dieses frequenzmodulierten Signals, einem numerischen Demodulator (13) zum Wiedererzeugen dieses numerischen Signals ausgehend von dem in der Frequenz herabgesetzten Signal (E'(t)), Rechenmittel (24,25) zum Ermitteln der Anzahl der Perioden eines Referenzsignals (CK) dieses Frequenzumsetzungsblocks während einer Periode des in der Frequenz herabgesetzten Signals (E'(t)), wobei der numerische Demodulator (13) Rechenmittel (13C) zum Berechnen der Periode dieses in der Frequenz herabgesetzten Signals ((E'(t)) ausgehend von der Anzahl der Perioden des Referenzsignals (CK) umfaßt, **dadurch gekennzeichnet, daß** die Dauer der Periode des Referenzsignals (CK) variabel ist und zwei mögliche Werte, T1 und T2, annehmen kann, die Rechenmittel einen ersten Zähler (24) zum Zählen einer Zahl P der Perioden der Dauer T1 des Referenzsignals (CK) während einer Periode des in der Frequenz herabgesetzten Signals (E'(t)) sowie einen zweiten Zähler (25) zum Zählen einer Zahl Q der Perioden der Dauer T2 des Referenzsignals (CK) während einer Periode des in der Frequenz herabgesetzten Signals ((E'(t)) umfaßt, und daß die Rechenmittel (13C) des numerischen Demodulators die Periode des in der Frequenz herabgesetzten Signals (E'(t)) durch Addieren der P Perioden der Dauer T1 und der Q Perioden der Dauer T2 berechnen.

**2.** Empfänger nach Anspruch 1, **dadurch gekennzeichnet, daß** das Referenzsignal (CK) von einem lokalen Oszillator (14) des Frequenzumsetzungsblocks (12) erzeugt wird.

**3.** Empfänger nach Anspruch 1 oder 2, **dadurch gekennzeichnet, daß** der numerische Demodulator ferner Mittel (13A) zum Umwandeln des in der Frequenz herabgesetzten Signals (E'(t)) in ein logisches Signal und Mittel (13B) zum Erfassen der steigenden Flanken dieses logischen Signals umfaßt, wobei der erste und der zweite Zähler (24,25) bei jeder steigenden Flanke dieses logischen Signals neu initialisiert werden.

**4.** Empfänger nach Anspruch 1 oder 2, **dadurch gekennzeichnet, daß** der numerische Demodulator ferner Mittel (13A) zum Umwandeln des in der Frequenz herabgesetzten Signals (E'(t)) in ein logisches Signal und Mittel (13B) zum Erfassen der fallenden Flanken dieses logischen Signals umfaßt, wobei der erste und der zweite Zähler (24,25) bei jeder fallenden Flanke dieses logischen Signals neu initialisiert werden.

**5.** Empfänger nach einem der vorangehenden Ansprüche, **dadurch gekennzeichnet, daß** er als integrierter Schaltkreis realisiert ist.

FIG.1
(art antérieur)

EP 1 261 182 B1

FIG.2